(19) Europäisches Patentamt
European Patent Office
Office européen des brevets

(11) Numéro de publication : **0 278 884 B1**

(12)

# FASCICULE DE BREVET EUROPEEN

(45) Date de publication du fascicule du brevet :
**18.12.91 Bulletin 91/51**

(51) Int. Cl.$^5$ : **F25B 21/02, G05D 23/24**

(21) Numéro de dépôt : **88430005.4**

(22) Date de dépôt : **09.02.88**

(54) **Dispositif de réfrigération et de maintien à température contrôlée de surfaces de travail, cuves à liquides ou boîtes de conservation.**

(30) Priorité : **10.02.87 FR 8701730**

(43) Date de publication de la demande :
**17.08.88 Bulletin 88/33**

(45) Mention de la délivrance du brevet :
**18.12.91 Bulletin 91/51**

(84) Etats contractants désignés :
**AT BE CH DE ES FR GB GR IT LI LU NL SE**

(56) Documents cités :
**DE-A- 3 404 256**
**FR-A- 1 330 745**
**FR-A- 2 492 073**
**FR-A- 2 539 238**
**GB-A- 2 073 455**
**US-A- 2 959 925**
**US-A- 3 194 023**
**US-A- 3 225 549**
**US-A- 3 230 723**

(56) Documents cités :
**US-A- 3 234 595**
**US-A- 3 986 337**
**US-A- 4 301 658**
**US-A- 4 314 666**
**US-A- 4 487 619**
**REVUE PRATIQUE DU FROID ET DU CONDITIONNEMENT DE L'AIR, vol. 23, no. 291, septembre 1970, pages 53-55; G. ANDREIEFF: "La réfrigération thermo-électrique par l'effet Peltier"**

(73) Titulaire : **Joly, Richard .**
**2, rue Parrot**
**F-75012 Paris (FR)**

(72) Inventeur : **Joly, Richard .**
**2, rue Parrot**
**F-75012 Paris (FR)**

(74) Mandataire : **Marek, Pierre**
**28 & 32 rue de la Loge**
**F-13002 Marseille (FR)**

Jouve, 18, rue Saint-Denis, 75001 PARIS

## Description

La présente invention concerne un appareil de réfrigération et de maintien à température contrôlée de surfaces de travail, cuves à liquides ou boîtes de conservation.

Dans l'application à la réfrigération contrôlée de surfaces de travail, l'invention a notamment pour but de permettre la manipulation, sur ces surfaces, de produits sensibles aux variations de température ou devant être travaillés à des températures déterminées.

Dans ce domaine, une application particulièrement intéressante de l'invention réside dans la réalisation de tables de travail comportant une surface réfrigérante permettant d'effectuer des mélanges des ciments de scellement ou autres matériaux utilisés dans l'art dentaire et dont la température doit être amenée et maintenue, lors du mélange, à une valeur se situant juste au-dessus du point de rosée, en milieu ambiant.

On connaît (US-A-3.986.337) un dispositif de réfrigération et de maintien à température contrôlée de surfaces de travail, comportant une surface réfrigérante accolée, par l'une de ses faces, à un ensemble de cellules Peltier elles-mêmes placées en contact, par leur face opposée, avec un radiateur ventilé par un ventilateur, et comprenant un système de contrôle de la température désirée comportant un capteur de température placé au contact de la surface réfrigérante et un système électronique de contrôle et de régulation assurant la régulation de l'alimentation des cellules Peltier, de façon à ajuster la température de la surface réfrigérante à la température programmée.

Un inconvénient des appareils de ce genre réside dans le fait que l'opérateur n'a pas connaissance, au préalable et en permanence, de la température de rosée, de sorte que la recherche, l'obtention et le contrôle de la température souhaitable exigent plusieurs vérifications et manipulations, c'est-à-dire un temps relativement long représentant des pertes de temps regrettables. On obtient, d'autre part, une connaissance très approximative de la température de rosée, en recherchant, par tâtonnement et à l'aide du potentiomètre, l'apparition de rosée sur la plaque de travail. En outre, la commande de la température de la plaque de travail s'opère à l'aide du potentiomètre, à partir de graduations peu précises situées autour de celui-ci, de sorte que l'on a toujours une connaissance également très approximative des températures de travail obtenues. De plus, la température de la surface de travail reste influencée par les variations de la température ambiante et de l'humidité relative ambiante, de sorte que l'on ne peut éviter l'apparition d'humidité sur ladite surface, par exemple lorsque la température ambiante s'abaisse jusqu'au point de rosée.

Un autre inconvénient de ce genre d'appareils découle du fait que leur surface de travail réfrigérante métallique ne présente pas une température très homogène de sorte qu'ils ne permettent pas toujours d'obtenir des résultats très satisfaisants dans l'application au mélange des ciments dentaires ou dans le domaine de la recherche. En outre, cette surface de travail réfrigérante métallique est corrodée par les nombreux mélanges exécutés, car la plupart des ciments de scellement permanents utilisés en art dentaire sont composés de mélanges d'oxyde de zinc et d'acide phosphorique.

L'invention a notamment pour but de remédier à ces inconvénients.

Selon l'invention, cet objectif est atteint grâce à un dispositif de réfrigération et de maintien à température contrôlée de surfaces de travail, du genre décrit ci-dessus, lequel est remarquable par le fait qu'il comporte un module électronique de commande automatique comprenant un microprocesseur, agencé de façon à pouvoir déterminer la température de rosée en fonction de la température ambiante et de l'humidité relative ambiante et à pouvoir commander le système de contrôle et de régulation d'une telle manière que la température de la surface réfrigérante soit, en permanence, légèrement supérieure à la température de rosée.

Grâce à cet agencement, la surface réfrigérante peut être amenée à la température souhaitable de manière rapide et aisée et ensuite maintenue à une température légèrement supérieure à la température de rosée, pendant toute la durée nécessaire, quelles que soient les variations de la température ambiante et/ou de l'humidité relative ambiante (hygrométrie).

La température de la surface réfrigérante peut être connue avec une grande précision et affichée sur un écran lumineux.

Selon une autre caractéristique intéressante, le dispositif de réfrigération selon l'invention est encore remarquable par le fait que la surface réfrigérante destinée à se trouver en contact, par l'une de ses faces, avec le produit à refroidir, est exécutée en céramique.

Grâce à cette construction, la surface réfrigérante est compacte et suffisamment conductrice de chaleur pour présenter une température très homogène et très précise.

Grâce à sa facilité d'utilisation et à sa grande précision, l'appareil selon l'invention est susceptible d'applications avantageuses dans de nombreux domaines.

Dans le domaine médical, il peut, par exemple, être agencé pour pouvoir :

— constituer une table de travail présentant une surface réfrigérante de mélange de ciments et autres matériaux utilisés en dentisterie et en chirurgie orthopédique, conférant à ces produits des propriétés optimales à des températures connues ;

— maintenir à une température constante, certains produits sensibles aux variations thermiques ;

— conserver certains prélèvements médicaux à des températures contrôlables (par exemple : liquide cephalo-rachidien, urines, sang) ;

— procéder à des études sur la flore microbienne en fonction de la température, dans le domaine de la recherche médicale ;

— maintenir des liquides à des températures programmées par l'utilisateur (par exemple dans le domaine de l'enzymologie).

Dans d'autres domaines, l'appareil selon l'invention peut, par exemple, être agencé pour pouvoir constituer :

— une surface de travail pour l'élaboration de certains produits cosmétiques ;

— un dispositif de culture de certaines variétés végétales, permettant de maintenir le support de culture (terreau ou autre) à la température souhaitée.

Dans l'application particulièrement intéressante de l'invention à la réalisation de tables de travail réfrigérantes utilisables pour le mélange des ciments de scellement, la précision de l'appareil permet de prolonger le temps d'intervention pendant lequel les ciments conservent une fluidité permettant une meilleure mise en place des éléments à sceller (tenons, couronnes et bridges, en prothèse ; ou bagues, en orthodontie).

Le module de commande automatique est programmé au moyen d'une table de détermination de la température de rosée, en fonction de la température ambiante et de l'humidité relative ambiante. Le praticien peut ainsi maintenir, en permanence, la surface de travail réfrigérante à une température très légèrement supérieure à la température de rosée, en évitant ainsi toute condensation sur ladite surface de travail. Il est donc possible, grâce au dispositif selon l'invention, de travailler à la température la plus basse possible, en évitant toute condensation qui pourrait altérer les propriétés des ciments de scellement.

Dans l'application intéressante à l'art dentaire, l'objet de l'invention procure notamment les avantages suivants :

— gain de temps de travail ;

— meilleure adaptation des tenons radiculaires et dentaires ;

— diminution des risques de surocclusion ;

— augmentation de la résistance du ciment à la pression et diminution de sa solubilité dans le milieu buccal, grâce à une meilleure homogénéité du mélange ;

— retard du début de prise du ciment mis en place dans des couronnes et bridges préalablement refroidis;

— accélération du temps de prise lorsque les éléments ont été placés en bouche.

Les buts, caractéristiques et avantages ci-dessus, et d'autres encore, ressortiront mieux de la description qui suit et des dessins annexés dans lesquels :

Les figures 1, 2 et 3 sont des vues en perspective illustrant différents modes d'exécution du dispositif de réfrigération selon l'invention agencé pour constituer, respectivement, une table de travail, une cuve à liquides et une boite de conservation.

La figure 4 est une vue en perspective et à plus grande échelle de la table de travail illustrée à la figure 1.

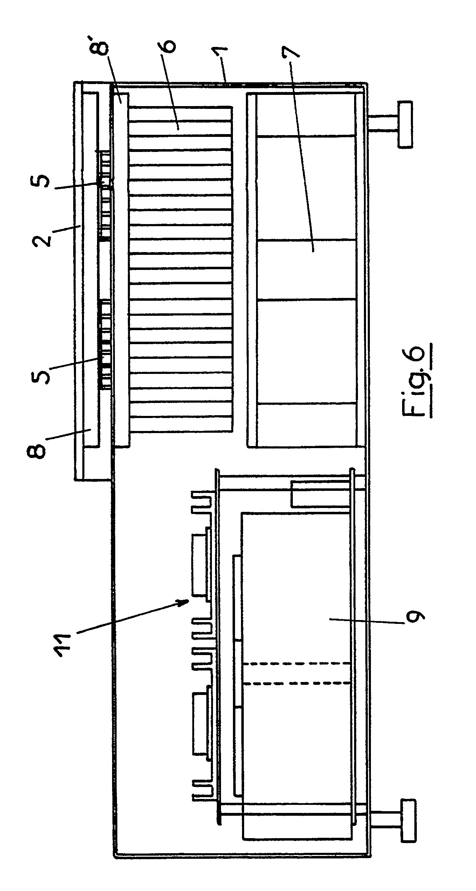

La figure 5 est une vue de la face arrière de cette dernière.

La figure 6 est une vue en coupe verticale et à caractère schématique de cette table de travail.

La figure 7 est une vue en coupe horizontale et a caractère schématique de celle-ci.

La figure 8 représente un circuit électronique de la surface de travail à température contrôlée.

La figure 9 est une autre représentation de ce circuit électronique auquel est incorporé un dispositif électronique permettant l'affichage des températures de référence ou de la surface de travail en degrés centigrades ou en degrés Farenheit.

La figure 10 représente le montage électronique opérant la conversion des degrés centigrades en degrés Farenheit.

La figure 11 illustre le circuit électronique de l'appareil selon l'invention qui est piloté par un module de commande comprenant un microprocesseur.

On se réfère auxdits dessins pour décrire un exemple de réalisation intéressant, mais nullement limitatif, du dispositif de réfrigération selon l'invention qui, suivant cet exemple, constitue une table de travail comportant une surface réfrigérante permettant d'effectuer des mélanges ou des manipulations de produits tels que des ciments de scellement.

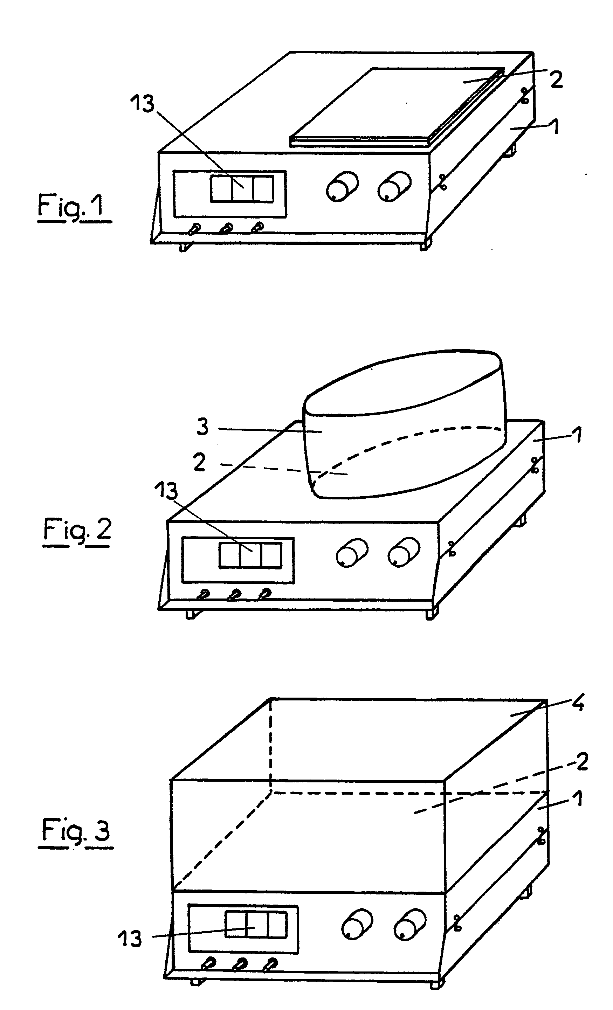

Toutefois, et comme indiqué précédemment, l'invention peut également être appliquée à la réalisation de cuves à liquides (figure 2) ou de boîtes de conservation (figure 3) comportant un fond réfrigérant ou autre paroi réfrigérante.

Pour cette raison, l'expression "surface de travail" utilisée dans la suite du présent exposé et qui convient à une table de travail doit être considérée comme l'équivalente de "surface réfrigérante" qui serait plus appropriée pour désigner le fond réfrigérant des appareils illustrés aux figures 2 et 3.

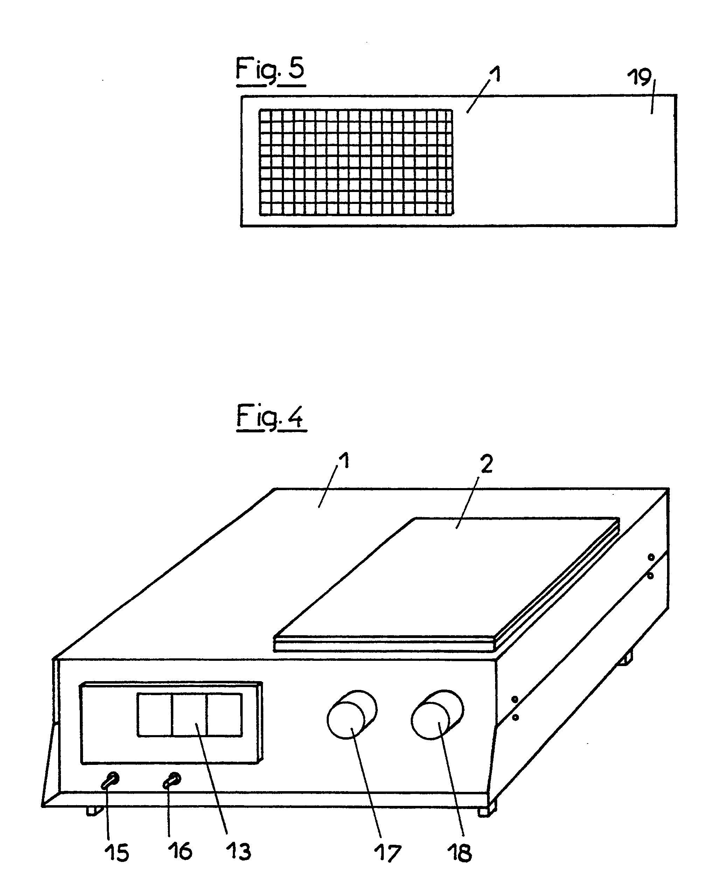

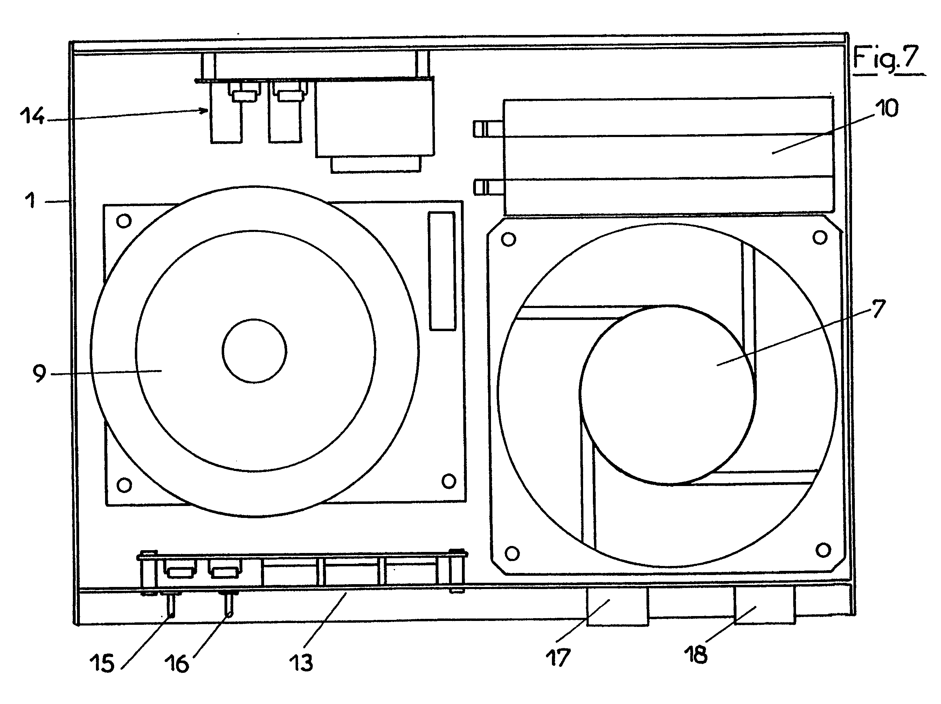

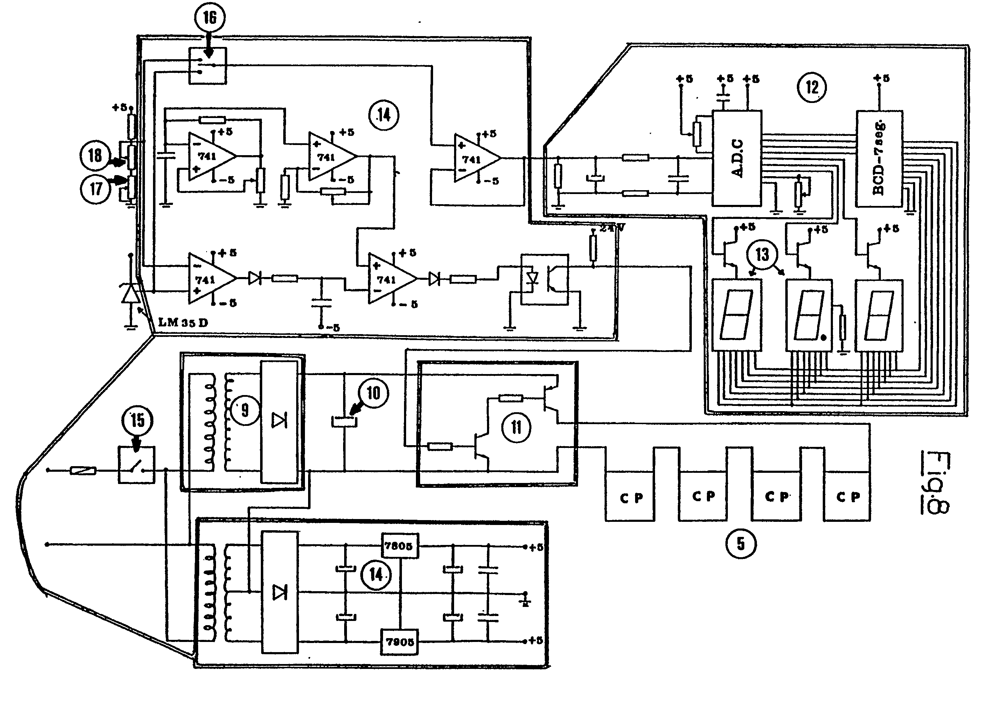

Le dispositif selon l'invention comprend un carter 1, de forme parallélépipédique ou autre, dont la paroi supérieure présente une ouverture au-dessus de laquelle est installée une surface de travail 2 qui peut être constituée par une plaque plane lorsque l'appareil constitue une table de travail (figures 1, 4, 6, 7), ou par le fond d'une cuve 3 (figure 2) ou par le fond d'une boîte 4 (figure 3).

Selon une importante caractéristique de l'invention, la surface de travail 2 est exécutée en céramique ; la plaque de céramique pouvant avoir une épaisseur de l'ordre de 4 mm dans l'application illustrée et décrite.

La surface de travail 2 ainsi réalisée est accolée, par l'intermédiaire de sa face inférieure ou face interne, à un ensemble de cellules Peltier 5.

De tels éléments thermoélectriques produisant l'effet Peltier sont bien connus. Leur mode d'action est celui de pompes à chaleur qui produisent de la chaleur sur un de leur côté et du froid sur l'autre.

L'utilisation de cellules Peltier est préférable à tout autre système de thermopompage, en raison du fait que :

— ce sont des éléments fiables agissant sous un courant de basse tension ;

— ce sont des dispositifs réversibles dont le sens du pompage de la chaleur dépend du sens de la tension à laquelle on les soumet ;

— leur faible dimension est très avantageuse dans l'application aux dispositifs revendiqués ;

— leur rendement est très élevé (proche de 80%) ;

— il s'agit de dispositifs d'action immédiate qui permettent d'atteindre d'importants abaissements ou accroissements de température dans un temps très court ; l'abaissement ou l'augmentation de température susceptibles d'être obtenus à l'aide de cellules Peltier pouvant atteindre 40 degrés C.

Les cellules Peltier se trouvent également en contact, par leur face opposée ou face inférieure, avec un radiateur 6 disposé au-dessous de ces dernières. Un ventilateur 7 placé au-dessous dudit radiateur assure la ventilation de celui-ci, pour le maintenir à la température ambiante.

De manière avantageuse, une plaque d'aluminium 8 est disposée entre la surface de travail 2 et l'ensemble de cellules Peltier 5. Cette plaque peut, par exemple, avoir une épaisseur de l'ordre de 5 mm et une dimension égale ou sensiblement égale à celle de la surface de travail, et elle a pour fonction d'homogénéiser la température de celle-ci.

Une deuxième plaque d'aluminium 8', identique à la plaque 8, peut être placée entre l'ensemble de cellules Peltier et le radiateur 6, afin d'homogénéiser la chaleur qui est communiquée audit radiateur.

Le dispositif auquel s'applique l'invention comprend encore :

— une source d'alimentation ;

— au moins un capteur de température ;

— un système d'affichage ;

— un système de contrôle de température et de commande de l'alimentation des cellules Peltier.

Le circuit électronique de ces différents systèmes est notamment illustré à la figure 8.

La source d'alimentation désignée par la référence 9 à la figure 8 comprend un transformateur et un pont de diodes.

Elle est conçue pour fournir les tensions suivantes :

+ 5 volts ; 1 ampère .......... courant continu ;

– 5 volts ; 1 ampère .......... courant continu ;

– 24 volts ; 5 ampères.......... courant continu.

Les tensions continues sont stabilisées et limitées pour protéger des courts-circuits.

La source d'alimentation possède en outre un limiteur d'intensité du type thermique et un fusible de protection ; elle est reliée aux cellules Peltier par l'intermédiaire d'un condensateur 10 et d'une plaque d'alimentation 11.

Les capteurs de température placés au contact de la surface de travail 2 et sous cette dernière, sont constitués par des éléments intégrés LM35 qui fournissent une tension de sortie proportionnelle à la température à laquelle se trouve le capteur. La constance de proportionalité tension-température est donnée par la formule:

$$KT = 10 \text{ mV/K}.$$

Ces éléments possèdent une compensation d'erreur, c'est-à-dire qu'il est possible de les calibrer pour une température donnée, ce qui permet de n'avoir pour erreur, à cette température, que l'erreur de calibrage.

L'alimentation de ces éléments se produit pour des intensités : $1\ mA \leqq I \leqq 3\ mA$

Le système d'affichage désigné dans son ensemble par la référence 12 à la figure 8, se compose :

— d'un convertisseur analogique-digital ;

— d'un circuit excitateur d'affichage ;

— d'un écran numérique d'affichage 13.

L'entrée de ce système d'affichage a une sensibilité de 1 mV, ce qui permet des lectures comprises entre – 99 et 999 mV.

Le système de contrôle de température et de commande de l'alimentation des cellules Peltier ou système de régulation thermique est désigné par les références 14 sur la figure 8.

Les cellules Peltier sont alimentées suivant le principe suivant :

Au cours de chaque cycle de travail T de l'appareil, les cellules sont alimentées par une tension V constante pendant une durée A et ne sont plus alimentées pendant une durée T-A. Autrement dit, le principe d'alimentation des cellules Peltier est celui du "tout ou rien".

Le rapport $\frac{A}{T}$, quotient du temps pendant lequel les cellules sont alimentées au cours d'un cycle par la période du cycle, est calculé par l'appareil de façon que la température de la surface de travail prenne la valeur souhaitée. Dans le mode de fonctionnement manuelle l'utilisateur peut introduire manuellement sur l'écran d'affichage 13 la température à laquelle il souhaite utiliser la surface de travail, le ou les capteurs inclus dans l'appareil et situés au contact de la surface de travail 2 permettent au dispositif électronique interne de comparer à tout instant la température de la surface à la température souhaitée et en déduit le rapport approprié de $\frac{A}{T}$ pour amener ladite surface à la température voulue.

Dès que la température souhaitée est introduite par l'utilisateur sur l'écran d'affichage 13 un contrôle de l'alimentation des cellules Peltier ajuste en permanence la température de la surface de travail à la température affichée.

Comme le système de régulation de l'alimentation des cellules Peltier est du type "Tout ou Rien", on a choisi un critère de régulation périodique, de fréquence constante mais dont la partie du cycle correspondant à l'excitation est de longueur variable. Soit T la période et A la partie de la période correspondant à l'excitation des cellules, la variable $R = \frac{A}{T}$ vérifie évidemment $0 \leqq R \leqq 1$

Le système électronique de contrôle et de régulation est composé des parties suivantes :

1. — Générateur d'onde triangulaire

2.— Comparateur des tensions V correspondant aux températures de la surface de travail ts et de la température de référence tr (température affichée par l'utilisateur).

Mission du comparateur :

ts > tr $\Rightarrow$ V sortie = + 5 V

ts < tr $\Rightarrow$ V sortie = – 5 V cette tension de sortie du comparateur permet de charger un condensateur à travers une résistance.

La tension du condensateur est comparée avec la tension du générateur d'onde triangulaire et les cellules Peltier sont alimentées comme le montrent les schémas ci-dessous.

EP 0 278 884 B1

Sur sa face avant, l'appareil comporte un interrupteur 15 permettant la mise sous tension (position "ON") ou l'arrêt (position "OFF") de l'appareil, et un commutateur 16 permettant, dans une première position (position "TR"), d'afficher la température de référence constituée par la température à laquelle on souhaite amener et maintenir la surface de travail 2, et, dans une deuxième position (position "TS"), la température de ladite surface de travail.

D'autre part, l'appareil comporte encore, sur sa face avant, deux boutons de réglage 17 et 18.

L'un de ces boutons (bouton 17) permet un affichage accéléré de la température souhaitée sur l'écran d'affichage digital 13 tandis que le second de ces boutons (bouton 18) permet de régler et d'afficher avec précision la valeur exacte de cette température.

Sur sa face arrière, l'appareil possède une prise 19 permettant son branchement sur le réseau de distribution électrique.

Le mode d'emploi de cet appareil est le suivant :

La prise 19 est branchée sur 110 ou 220 volts de courant alternatif 50 Hz/60 Hz, l'interrupteur 15 et le commutateur 16 étant dirigés vers le bas. Dès que l'on place l'interrupteur 15 en position "ON", le ventilateur 7 se met en marche et l'écran d'affichage numérique 13 s'allume et indique la température ambiante de la surface de travail (2). Le commutateur est alors positionné vers le haut, afin de permettre l'affichage de la température de référence (tr) correspondant à la température souhaitée de la surface de travail.

L'affichage de cette température s'opère à l'aide du bouton de réglage rapide 17 et du bouton de réglage de précision 18. Le réglage de précision peut être obtenu à 0,1 degré près.

La température de référence (tr) étant enregistrée, le commutateur est positionné vers le bas, en position "TS", et on peut alors observer, sur l'écran d'affichage numérique 13, l'évolution progressive de la température de la surface de travail (ts) vers la température de référence. Pour se remémorer la température de référence, à tout moment, il suffit de replacer le commutateur 16 vers le haut, sur "TR".

La température de la surface de travail descend d'abord entraînée par l'inertie en-dessous de la température de référence, pour remonter et se stabiliser ensuite autour de la température choisie. Dans le mode de fonctionnement manuel une table de détermination de la température de rosée permet à l'utilisateur de connaître, à partir de la température ambiante et de l'humidité relative, la température de rosée à un moment donné et de choisir, en fonction de cette dernière, la température de la surface de travail.

L'appareil décrit et illustré à titre d'exemple d'exécution fonctionne entre 0 degrés centigrade ou 32 degrés Farenheit et la température ambiante, mais il est aussi possible, selon le même principe, de concevoir un modèle qui fonctionnerait pour des valeurs de température beaucoup plus élevées ou inférieures à 0 degré C (32 degrés F). Un commutateur permettrait, dans ce cas, à l'utilisateur, d'inverser le sens du courant envoyé par le système électronique aux cellules Peltier et de les faire fonctionner soit pour refroidir la surface de travail soit pour la chauffer.

Des températures plus basses pourraient être données à la surface de travail en augmentant le nombre de cellules Peltier utilisées dans l'appareil précédemment décrit.

L'appareil peut être muni d'un dispositif électronique de double affichage, par exemple, commandé par un commutateur 20 à deux positions (°C-°F), et permettant l'affichage de la température de référence et de la température de la surface de travail, soit en degrés centigrades, soit en degrés Farenheit.

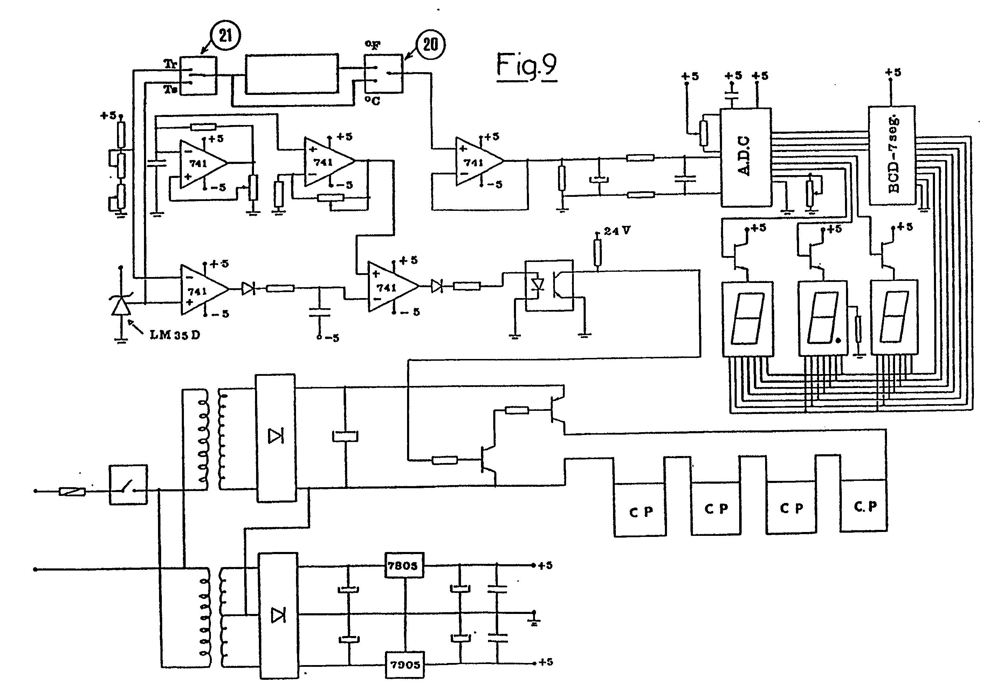

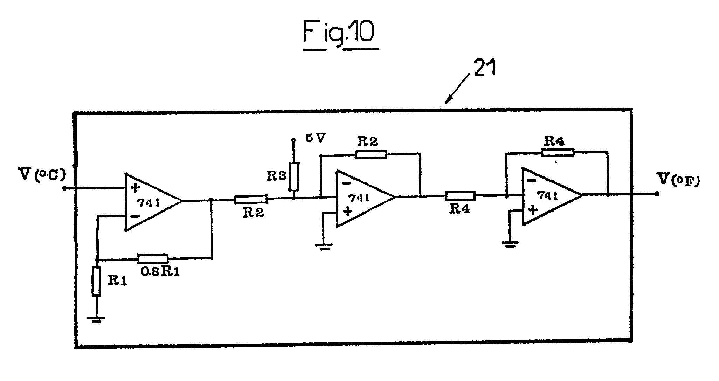

La figure 9 représente le circuit électronique de l'appareil auquel est incorporé un dispositif électronique 21 permettant la conversion des degrés centigrades en degrés Farenheit, et vice versa ; ce dispositif électronique étant illustré en détail à la figure 10.

Afin de réaliser le mode de fonctionnement automatique l'appareil selon l'invention est équipé d'un commutateur (22) et d'une prise de connexion (23), et son circuit électronique est agencé afin que ledit appareil soit relié à un module de commande comprenant un microprocesseur, de sorte que son fonctionnement soit entièrement automatique.

L'appareil est alors conçu pour pouvoir fonctionner, sélectivement, de deux façons différentes :

1 — avec affichage manuel de la température désirée et ajustement automatique de la température de la surface de travail à la température programmée, comme indiqué précédemment ;

2 — ou, selon une disposition caractéristique de l'invention, en liaison avec le module électronique doté d'un microprocesseur qui commande, contrôle et ajuste en permanence la température de la surface de travail, ce module électronique de commande automatique comprenant un microprocesseur, étant agencé de manière à déterminer la température de rosée en fonction de la température ambiante et de l'humidité relative ambiante, et à commander le système de contrôle et de régulation d'une telle manière que la température de la surface réfrigérante soit en permanence légèrement supérieure à la température de rosée.

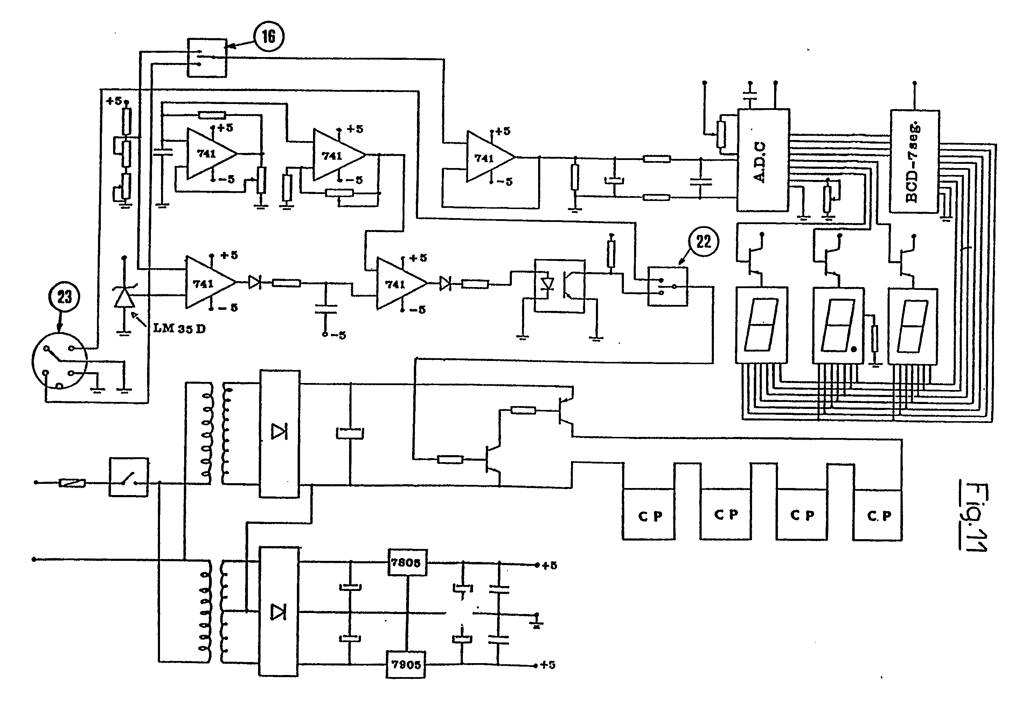

La figure 11 représente le circuit électronique d'un appareil de ce genre.

7

## Revendications

1. Dispositif de réfrigération et de maintien à température contrôlée de surfaces de travail, comportant une surface réfrigérante (2) accolée, par l'une de ses faces, à un ensemble de cellules Peltier (5) elles-mêmes placées en contact, par leur face opposée, avec un radiateur (6) ventilé par un ventilateur (7), au moins un capteur de température placé au contact de la surface réfrigérante et un système électronique de contrôle et de régulation (9, 10, 11, 12, 14) permettant de comparer la température programmée (tr) et la température mesurée (ts) par le capteur et assurant la régulation de l'alimentation des cellules Peltier, de façon à ajuster la température de la surface réfrigérante à la température programmée, caractérisée en ce qu'il comporte un module électronique de commande automatique comprenant un microprocesseur, agencé de façon à déterminer la température de rosée en fonction de la température ambiante et de l'humidité relative ambiante, et à commander le système de contrôle et de régulation d'une telle manière que la température de la surface réfrigérante soit en permanence légèrement supérieure à la température de rosée.

2. Dispositif selon la revendication 1, caractérisé en ce que ladite surface réfrigérante (2) est exécutée en céramique.

3. Dispositif selon l'une des revendications 1 ou 2, caractérisé en ce qu'il comprend un système d'affichage (12) de la température légèrement supérieure à la température de rosée programmée par le module électronique de commande automatique.

4. Dispositif suivant la revendication 3, caractérisé en ce que le système d'affichage (12) comprend :
— un convertisseur analogique-digital ;
— un circuit excitateur d'affichage ;
— et un écran numérique d'affichage (13).

5. Dispositif selon la revendication 1, caractérisé en ce que la source d'alimentation (9) des cellules Peltier (5) comprend un transformateur et un pont de diodes.

6. Dispositif selon la revendication 5, caractérisé en ce que la source d'alimentation (9) possède un limiteur d'intensité du type thermique et un fusible de protection, et en ce qu'elle est reliée aux cellules Peltier par l'intermédiaire d'un condensateur (10) et d'une plaque d'alimentation (11).

7. Dispositif suivant L'une quelconque des revendications 1 à 6, caractérisé en ce que le système électronique de contrôle et de régulation comprend un générateur d'onde triangulaire, un comparateur des tensions (V) correspondant aux températures de la surface de travail (ts) et de la température de référence (tr), et un condensateur chargé, à travers une résistance, par la tension de sortie dudit comparateur.

8. Dispositif selon l'une quelconque des revendications 1 à 7, caractérisé en ce qu'il comporte un dispositif électronique (21) de conversion des degrés centigrades en degrés Farenheit, et vice versa, par exemple commandé par un commutateur (20) à deux positions.

9. Dispositif selon l'une quelconque des revendications 1 à 8, caractérisé en ce que son circuit électronique est agencé pour permettre la commande de la régulation de la température (ts) de la surface de travail (2), soit par affichage manuel de la température désirée (tr) au moyen de boutons de réglage (17, 18), soit par le module de commande automatique doté du microprocesseur ; le dispositif étant pourvu, à cet effet, d'un commutateur (22) et d'une prise de connexion (23).

10. Dispositif selon la revendication 2, caractérisé en ce qu'une plaque d'aluminium (8) est disposée au-dessous de la surface réfrigérée (2), entre cette dernière et l'ensemble de cellules Peltier.

11. Dispositif selon l'une des revendications 2 ou 10, caractérisé en ce qu'une plaque d'aluminium (8') est disposée entre l'ensemble de cellules Peltier (5) et le radiateur (6).

## Patentansprüche

1. Vorrichtung zur Kühlung und Einhaltung einer überwachten Temperatur von Arbeitsflächen, enthaltend eine Kühlfläche (2), die mit der einen ihrer Seiten mit einer Anordnung von Peltier-Zellen (5) verbunden ist, die ihrerseits mit ihrer gegenüberliegenden Seite mit einem durch einen Ventilator (7) belüfteten Radiator (6) in Kontakt stehen, mindestens einen mit der Kühlfläche in Kontakt stehenden Temperaturmeßwertgeber und ein elektronisches Überwachungs- und Regelsystem (9, 10, 11, 12, 14), das einen Vergleich der programmierten Temperatur (tr) und der durch den Meßwertgeber gemessenen Temperatur (ts) gestattet und die Regelung der Versorgung der Peltier-Zellen in der Weise sicherstellt, daß die Temperatur der Kühlfläche auf die programmierte Temperatur eingestellt wird, **gekennzeichnet durch** ein einen Mikroprozessor enthaltendes elektronisches Modul zur automatischen Steuerung, das so ausgebildet ist, daß es die Taupunktstemperatur als Funktion der Umgebungstemperatur und der relativen Umgebungsfeuchtigkeit bestimmt und das Überwachungs- und Regelsystem in der Weise steuert, daß sich die Temperatur der Kühlfläche dauernd leicht über der Taupunktstemperatur befindet.

2. Vorrichtung nach Anspruch 1, **dadurch gekennzeichnet,** daß die Kühlfläche (2) aus Keramik gebildet ist.

3. Vorrichtung nach einem der Ansprüche 1 oder 2, **gekennzeichnet durch** ein Anzeigesystem (12) für die durch das automatische elektronische Steuermodul programmierte leicht über der Taupunktstemperatur befindliche Temperatur.

4. Vorrichtung nach Anspruch 3, **dadurch gekennzeichnet,** daß das Anzeigesystem (12) enthält :

— einen Analog-Digital-Wandler ;

— eine Anzeigetreiberschaltung ;

— und eine numerische Anzeigefläche (13).

5. Vorrichtung nach Anspruch 1, **dadurch gekennzeichnet,** daß die Versorgungsquelle (9) der Peltier-Zellen (5) einen Transformator und eine Diodenbrücke enthält.

6. Vorrichtung nach Anspruch 5, **dadurch gekennzeichnet,** daß die Versogungsquelle (9) einen thermisch arbeitenden Strombegrenzer und eine Schutzsicherung enthält, und daß sie mit den Peltier-Zellen über einen Kondensator (10) und eine Versorgungsplatte (11) verbunden ist.

7. Vorrichtung nach einem der Ansprüche 1 bis 6, **dadurch gekennzeichnet,** daß das elektronische Überwachungsund Regelsystem einen Dreieckswellengenerator, einen Vergleicher für den Temperaturen der Arbeitsfläche (ts) und der Referenztemperatur (tr) entsprechende Spannungen (V) und einen über einen Widerstand durch die Spannung am Ausgang des Vergleichers geladenen Kondensator enthält.

8. Vorrichtung nach einem der Ansprüche 1 bis 7, **gekennzeichnet durch** eine elektronische Vorrichtung (21) zur Umwandlung von Celsius-Graden in Grad Fahrenheit und umgekehrt, die beispielsweise durch einen Schalter (20) mit zwei Stellungen gesteuert wird.

9. Vorrichtung nach einem der Ansprüche 1 bis 8, **dadurch gekennzeichnet,** daß deren elektronische Schaltung so ausgebildet ist, daß sie die Steuerung zur Regelung der Temperatur (ts) der Arbeitsfläche (2) entweder durch manuelle Einstellung der gewünschten Temperatur (tr) mittels Regelknöpfen (17, 18) oder durch das mit dem Mikroprozessor ausgestattete automatische Steuermodul gestattet, wobei die Vorrichtung zu diesem Zweck mit einem Schalter (22) und einer Verbindungsbuchse (23) versehen ist.

10. Vorrichtung nach Anspruch 2, **dadurch gekennzeichnet,** daß eine Aluminiumplatte (8) unter der gekühlten Fläche (2) zwischen der letzteren und der Anordnung von Peltier-Zellen vorgesehen ist.

11. Vorrichtung nach einem der Ansprüche 2 oder 10, **dadurch gekennzeichnet,** daß eine Aluminiumplatte (8') zwischen der Anordnung von Peltier-Zellen (5) und dem Radiator (6) vorgesehen ist.

## Claims

1. Device for cooling and maintaining a controlled temperature on work surfaces, comprising a cooling surface (2) attached by one of its faces to an assembly of Peltier cells (5), themselves in contact via their opposite face with a radiator (6) ventilated by means of a ventilator (7), at least one temperature sensor placed in contact with the cooling surface and an electronic control and regulation system (9, 10, 11, 12, 14) making it possible to compare the programmed temperature (tr) and the temperature measured (ts) by the sensor and ensuring regulation of the power supply to the Peltier cells, in such a way as to adjust the temperature of the cooling surface to the programmed temperature, characterised by the fact that it comprises an automatic electronic command module comprising a micro-processor, fitted so as to determine the dewpoint in function of the ambient temperature and of the relative ambient humidity, and to command the control and regulation system in such a way that the temperature of the cooling surface is constantly slightly higher than that of the dewpoint.

2. Device as per claim 1, characterised by the fact that the aforesaid cooling surface (2) is made of ceramic material.

3. Device as per one of claims 1 or 2, characterised by the fact that it comprises a system for displaying (12) the temperature slightly above the dewpoint programmed by the automatic electronic command module.

4. Device as per claim 3, characterised by the fact that the display system (12) comprises :

— an analog digital converter

— a excitation display circuit

— a numeric display screen (13).

5. Device as per claim 1, characterised by the fact that the source of supply (9) for the Peltier cells (5) comprises a transformer and a diode bridge.

6. Device as per claim 5, characterised by the fact that the source of supply (9) has an intensity limiter of the thermal type and a safety fuse, and that it is connected to the Peltier cells via a condenser (10) and a supply plate (11).

7. Device as per any of the claims 1 to 6, characterised by the fact that the electronic control and regulation system comprises a triangular wave generator, a comparator (V) for the voltages corresponding to the temperatures of the work surface (ts) and a condenser loaded, via a resistor, by the output voltage of the aforesaid comparator.

8. Device as per any of the claims 1 to 7, characterised by the fact that it comprises an electronic device (21) for converting degrees Centigrade into degrees Fahrenheit and vice versa, controlled for instance by a two-position commutator (20).

9. Device as per any of the claims 1 to 8, characterised by the fact that its electronic circuit is fitted so as to allow the regulation of the temperature (ts) of the work surface (2) to be commanded either by manual display of the required temperature (tr) by means of regulating buttons (17, 18) or through the automatic command module with the micro-processor, the device being provided with a commutator (22) for that purpose and a connection plug (23).

10. Device as per claim 2, characterised by the fact that an aluminium plate (8) is fitted above the cooled surface (2), between the latter and the assembly of Peltier cells.

11. Device as per one of the claims 2 or 10, characterised by the fact that an aluminium plate (8′) is fitted between the assembly of Peltier cells (5) and the radiator (6).

Fig. 1

13

2

1

Fig. 2

3

2

13

1

Fig. 3

4

2

1

13

Fig. 5

Fig. 4

Fig.6

Fig.7

EP 0 278 884 B1

Fig.8

Fig.9

# Fig.10

Fig.11